# EUROPÄISCHE PATENTANMELDUNG

(11) **EP 0 856 267 A2**
(43) Veröffentlichungstag der Anmeldung: **05.08.1998**
(21) Anmeldenummer: 97122719.4
(22) Anmeldetag: 23.12.1997
(51) Int. Cl.: A47B 47/00

(54) **Modular aufbaubares Möbel**

(30) Priorität: 29.01.1997 DE 29702242 U
(71) Anmelder: Rüther, Hubert, 21217 Seevetal (DE)
(72) Erfinder: Rüther, Hubert, 21217 Seevetal (DE)
(74) Vertreter: Hübner, Gerd, Dipl.-Phys.

(57) **Zusammenfassung**

Ein modular aufbaubares Möbel ist mit einem Rahmen (1) und einer durch Eck-Beschlagteile (6) in der Rahmenöffnung montierbare Einsatzplatte (5) als Grundstrukturteile versehen. Das Eck-Beschlagteil (6) ist an der Einsatzplatte (5) lösbar befestigt und weist mindestens eine seitlich zugängliche, parallel zur Plattenebene verlaufende Aufnahme (15) für einen am Rahmen (1) montierten Haltestift (16) sowie eine Verriegelung (22) zur Arretierung des Haltestiftes (16) in der Aufnahme (22) auf.

## Beschreibung

Die Erfindung betrifft ein modular aufbaubares Möbel mit einem Rahmen, der vorzugsweise aus Rahmenstreben und Rahmen-Eckknoten zusammensetzbar ist, und mit einer Einsatzplatte. Rahmen und Einsatzplatte bilden die Grundstrukturteile des Möbelsystems.

Beim Rahmen kann es sich im übrigen beispielsweise um ein Großbaukasten-System handeln, wie es dem europäischen Patent 0 007 065 und den US-Patenten 4,353,661, 4,410,292 und 4,411,639 zugrundeliegt.

Bei diesem Großbaukasten-System sind als Einsatzplatten lediglich normale Füllungsplatten vorgesehen, die über Rastflansche in die Rahmenfelder oder -öffnungen eingerastet werden können. Damit können als Möbel zwar Stühle, Hocker oder Tische insbesondere für Kinder gestaltet werden, für ein modular aufbaubares Möbel, das Türen, Klappen und Innenflächer aufweisen muß, ist das Großbaukasten-System in seiner bekannten Form nicht geeignet.

Um hier Abhilfe zu schaffen, ist das gemäß Anspruch 1 vorgesehene Möbelsystem vorgesehen, dessen Kernstück in dem Eck-Beschlagteil liegt. Dieses Beschlagteil ist an der Einsatzplatte lösbar befestigt und mit mindestens einer seitlich zugänglichen, parallel zur Plattenebene verlaufenden Aufnahme versehen. Ferner ist ein Haltestift bei dem Möbelsystem vorgesehen, der am Rahmen montiert ist. Wie noch näher anhand des Ausführungsbeispiels erläutert wird, ist die Einsatzplatte durch die seitliche Zugänglichkeit der Aufnahme jeweils von der Seite her auf den im Rahmen sitzenden Haltestift aufzusetzen. Zur Arretierung des Haltestiftes in der Aufnahme ist eine entsprechende Verriegelung an dem Eck-Beschlagteil vorgesehen, wobei diese Verriegelung nicht zwingend geschlossen werden muß.

Bevorzugte Ausführungsformen sowie weitere Merkmale, Einzelheiten und Vorteile der Erfindung ergeben sich aus den Unteransprüchen bzw. der nachfolgenden Beschreibung, in der Ausführungsbeispiele des Erfindungsgegenstandes anhand der beigefügten Zeichnungen näher erläutert werden. Es zeigen:
- Fig. 1: eine schematische Perspektiv-Darstellung eines Möbels,
- Fig. 2: eine Innenansicht eines Eck-Beschlagteils in seinem Montagezustand auf der Einsatzplatte,
- Fig. 3: eine Ansicht des Eck-Beschlagteils (ohne Einsatzplatte) aus Pfeilrichtung III nach Fig. 2,
- Fig. 4: eine alternative Ausführungsform des Eck-Beschlagteils für Detail A aus Fig. 3 und
- Fig. 5: eine alternative Ausführungsform für die Aufnahme am Eck-Beschlagteil.

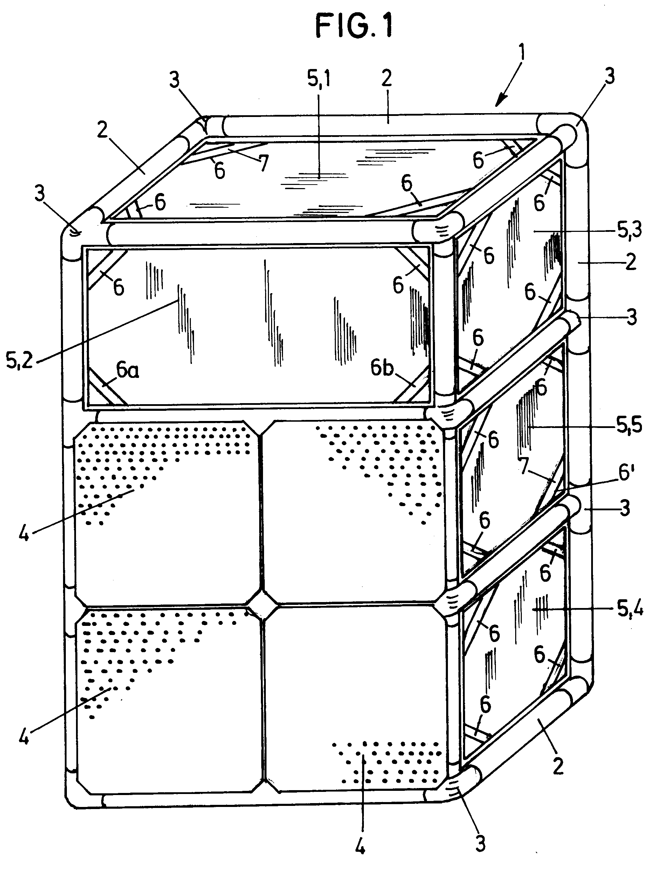

In Fig. 1 ist ein anrichtenartiges Möbel als ein Beispiel für das erfindungsgemäße Möbel gezeigt. Der Rahmen 1 ist dabei aus einzelnen, zylindrischen Rahmenstreben 2 und Rahmen-Eckknoten 3 zusammengesetzt. Bei den Rahmen-Eckknoten 3 kann es sich um 6-, 5-, 4- oder 3-armige Raumkupplungen bzw. 4-, 3- oder 2-armige rechtwinklige Flächenkupplungen handeln. Der Rahmen entstand aus dein unter der Handelsbezeichung 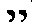 Quadro" auf dem Markt befindlichen Großbaukasten-System der Firma Quadro, D-72770 Reutlingen. Bei diesem System können Kunststoffplatten 4, die in Fig. 1 punktiert unterlegt sind, auf den Rahmen aufgerastet und ggf. von innen verschraubt werden.

Zum Möbel wird das Großbaukasten-System durch die eigens vorgesehenen Einsatzplatten 5, deren Abmessungen so dimensioniert sind, daß sie geringfügig kleiner als das lichte Innenmaß der einzelnen Rahmenfelder sind. Die Einsatzplatten selbst können Schichtholzplatten, Holzplatten mit aufkaschierten Acrylglas-Spiegeln, Kunststoffplatten, Stahl-Verbundplatten, Rastergitter o. dgl. sein.

Die Einsatzplatten 5 werden mit Eck-Beschlagteilen 6 in den einzelnen Feldern des Rahmens 1 gehalten.

Bei dem in Fig. 1 gezeigten Möbel soll die Einsatzplatte 5.1 eine statische, nicht zu öffnende Füllungsplatte sein, bei der Einsatzplatte 5.2 handelt es sich um eine um die Unterkante herausschwenkbare Klappe, 5.3 und 5.4 sind wiederum Füllungsplatten und 5.5 ist eine Tür. Diese verschiedenen Funktionen der Einsatzplatten 5 werden in noch zu erläuternder Weise durch die entsprechende Befestigung der Eck-Beschlagteile 6 bewerkstelligt.

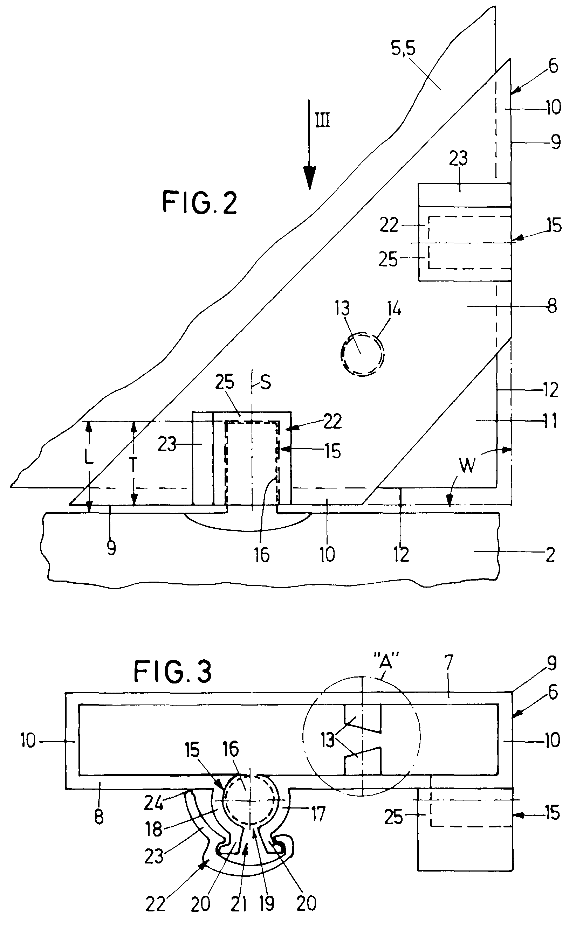

Diese Eck-Beschlagteile 6 sind in einer ersten Ausführungsform in Fig. 2 und 3 dargestellt. Es handelt sich dabei um ein Kunststoff-Spritzteil, das in Draufsicht miteinander fluchtende, trapezförmige Außen- und Innenschenkel 7, 8 aufweist, die durch entlang der Trapezschenkelseiten 9 verlaufende, zueinander einen rechten Winkel W beschreibende Verbindungsschenkel 10 miteinander verbunden sind. Dieses Klipp-Teil 6 ist auf die Ecke 11 jeder Einsatzplatte 5 wie in Fig. 2 gezeigt aufschiebbar, bis die Verbindungsschenkel 10 die zueinander senkrecht stehenden Stirnkanten 12 der Einsatzplatten 5 jeweils flankieren. Zur Befestigung des Klipp-Teils 6 dienen bei der in Fig. 2 und 3 gezeigten Ausführungsform zwei miteinander fluchtende, an die Innenseiten der Außen- und Innenschenkel 7, 8 angeformte, abgeschrägte Positionierstifte 13. Bein, Aufsetzen des Eck-Beschlagteils 6 auf die Ecke 11 wird das Klipp-Teil elastisch aufgeweitet und aufgeschoben, bis die Positionierstifte 13 unter der Eigenelastizität des Klipp-Teils 6 in eine entsprechende Bohrung 14 in der Einsatzplatte 5 einschnappen.

Das Klipp-Teil 6 weist ferner an seinen, Innenschenkel 8 zwei 90° zueinander versetzte Aufnahmen 15 auf, die jeweils im wesentlichen eine Einsteckhülse für einen Haltestift 16 an der Rahmenstrebe 2 bilden. Die Aufnahmen 15 verlaufen mit ihrer Achse parallel zur Plattenebene und bestehen dabei aus zwei angespritzten Rastschenkeln 17, 18, die zwischen sich eine Durchstecköffnung 19 bilden. Die Rastschenkel 17, 18 können mit ihren freien Ende 20 federnd auseinandergespreizt werden, wodurch der Haltestift 16 nicht nur axial in die Aufnahme 15 einsteckbar, sondern auch seitlich aus Pfeilrichtung 21 gemäß Fig. 3 in die Aufnahme 15 einschnappbar ist.

Zur Arretierung des Haltestiftes 16 in der Aufnahme 15 ist eine Klammer 22 vorgesehen, die die beiden in einander entgegengesetzter Richtung nach außen abgekröpften freien Enden 20 hintergreift und somit die beiden Rastschenkel 17, 18 in der in Fig. 3 gezeigten Stellung form- und kraftschlüssig fixiert. Die Klammer 22 ist über eine Strebe 23 und ein Filmscharnier 24 dauerhaft am Innenschenkel 8 des Klipp-Teils 6 festgelegt. Wie ferner in Fig. 2 deutlich wird, ist die axiale Länge L des Haltestiftes 16 größer die Tiefe T der Aufnahme 15, so daß ein querverlaufender Aufnahmeboden 25 auf der Stirnseite des Haltestiftes 16 aufsitzt und - sofern der Haltestift nach oben verläuft - das Klipp-Teil 6 und damit die Einsatzplatte 5 vom Stift getragen werden, statt auf dem Rahmen 1 aufzuliegen.

Wie aus Fig. 1 erkennbar ist, weisen alle Einsatzplatten 5 an ihren vier Ecken Klipp-Teile 6 auf. Um die eingangs erwähnten verschiedenen Funktionen der Einsatzplatten 5 zu erreichen, können die Klammern 22 an den jeweiligen Klipp-Teilen verschieden eingestellt werden, um die Haltestifte 16 zu arretieren oder aus der Aufnahme 15 ausrastbar zu lassen:

Für die nicht zu öffnenden Füllungsplatten 5.1, 5.3 und 5.4 werden in den Eckbereichen aller vier Rahmenstreben zwei jeweils Haltestifte 16 montiert, so daß in jedem Feld acht Haltestifte 16 im Bereich der Klipp-Teile 6 nach innen in die Rahmenfelder ragen. Anschließend werden die entsprechenden Einsatzplatten 5 von oben bzw. von der Seite aufgesetzt, so daß die Haltestifte 16 in die jeweiligen Aufnahmen 15 einrasten. Anschließend werden alle Aufnahmen 15 durch Aufschnappen der Klammern 22 gesichert.

Bei der Klappe 5.2 werden lediglich an den seitlich vertikal verlaufenden Rahmenstreben des entsprechenden Rahmenfeldes im unteren und oberen Eckbereich jeweils horizontal nach innen in das Rahmenfeld ragende Haltestifte 16 befestigt. Die eine Klappe bildende Einsatzplatte 5 wird von vorne auf diese Stifte aufgerastet. Es werden lediglich die Rastschenkel 17, 18 der beiden unteren Klipp-Teile 6a, 6b durch die Klammern 22 arretiert, so daß dort der Haltestift 16 nicht mehr aus der Aufnahme 15 herausgelangen kann. Allerdings ist eine Verschwenkung um die Stiftachse möglich, so daß die beiden unteren Klipp-Teile 6a, 6b der Einsatzplatte 5.2 als Scharnier wirken. An den beiden oberen Klipp-Teilen 6 wird die Klammer 22 nicht aufgesetzt, so daß die Aufnahme 15 mit ihren Rastschenkeln 17, 18 unter Auseinanderfedern wieder von den Haltestiften 16 abgezogen werden kann. Die oberen Klipp-Teile 6 stellen also in dieser Funktion lediglich eine Verrastung und damit Sicherung der Klappe 5.2 in ihrer geschlossenen Stellung dar.

Entsprechendes gilt für die seitliche Tür 5.5, bei der die hinteren, übereinanderliegenden Klipp-Teile 6 wiederum in der vorstellend erörterten Weise als Scharniere durch Aufsetzen von Klammern 22 fungieren können. Die entsprechende Funktionsstellung für das hintere untere Klipp-Teil 6' der Türplatte 5.5 ist in den Fig. 2 und 3 gezeigt. Die Scharnierachse S ist in Fig. 2 eingezeichnet. Zu ergänzen ist, daß eine leichtgängige Verschwenkbarkeit der Tür durch die Lagerung des Aufnahmebodens 25 auf dem Haltestift 16 gewährleistet ist.

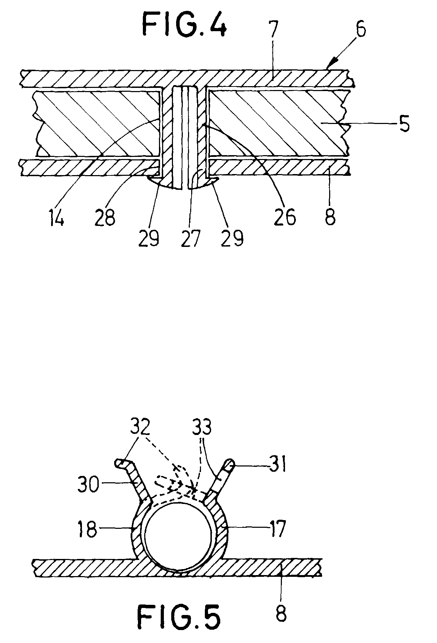

In Fig. 4 ist eine alternative Ausgestaltung für die Befestigung des Klipp-Teils 6 an der jeweiligen Einsatzplatte 5 dargestellt. Demnach werden nicht zwei Positionierstifte 13, sondern eine Federhülse 26 an der Innenseite des Außenschenkels 7 angeformt, die von einem geschlitzten Stift gebildet ist. Diese Federhülse 26 durchgreift wiederum eine entsprechende Bohrung in der Einsatzplatte, hintergreift jedoch mit ihren freien Federenden 27 eine Gegenöffnung 28 im Innenschenkel 8 des Klipp-Teils 6. Damit erfolgt eine echte Arretierung des Klipp-Teils 6 auf der Einsatzplatte. Zum Lösen dieser Arretierung müssen die Rastvorsprünge 29 am Federende 27 der Federhülse 26 nach innen gedrückt und das Klipp-Teil 6 elastisch aufgeweitet werden, so daß die Federhülse 26 aus der entsprechenden Bohrung in der Einsatzplatte 5 heraustritt und das Klipp-Teil 6 abgezogen werden kann.

In Fig. 5 ist eine alternative Ausgestaltung für die Arretierung der Aufnahme 15 dargestellt. Hier wird die Klammer durch entsprechende Fortsätze 30, 31 an den freien Enden der Rastschenkel 17, 18 in integraler Weise mit der Aufnahme 15 selbst gebildet. Der eine Fortsatz 30 weist an seinem freien Ende eine Haltenase 32 auf die - wie in Fig. 5 strichliert dargestellt ist - durch eine Öffnung 33 im gegenüberliegenden Fortsatz 31 hindurchgesteckt und arretiert werden kann.

## Patentansprüche

1. Modular aufbaubares Möbel mit
- einem Rahmen (1), vorzugsweise zusammensetzbar aus Rahmenstreben (2) und Rahmen-Eckknoten (3), und
- einer durch Eck-Beschlagteile (6) in der Rahmenöffnung montierbaren Einsatzplatte (5)
als Grundstrukturteile, wobei das Eck-Beschlagteil (6)
- an der Einsatzplatte (5) lösbar befestigt ist,
- mindestens eine seitlich zugängliche, parallel zur Plattenebene verlaufende Aufnahme (15) für einen am Rahmen (1) montierten Haltestift (16) sowie
- eine Verriegelung (22) zur Arretierung des Haltestiftes (16) in der Aufnahme (22) aufweist.

2. Möbel nach Anspruch 1, **dadurch gekennzeichnet, daß** die Einsatzplatte (5) eine Füllungsplatte (5.1), schwenkbare Tür (5.5) oder schwenkbare Klappe (5.2) ist.

3. Möbel nach Anspruch 1 oder 2, **dadurch gekennzeichnet, daß** das Eck-Beschlagteil ein auf die Ecke der Einsatzplatte (5) aufschiebbares Klipp-Teil (6) mit die Front- und Rückseite der Einsatzplatte (5) flankierenden Schenkeln (7, 8) ist, die durch quer zur Plattenebene verlaufende Verbindungsschenkel (10) verbunden sind.

4. Möbel nach Anspruch 3, **dadurch gekennzeichnet, daß** am Innenschenkel (8) des Klipp-Teils (6) die Aufnahme (15) für den Haltestift (16) angeordnet ist, welche Aufnahme (15) aus zwei angespritzten, federnden Rastschenkeln (17, 18) besteht, die zwischen sich eine Durchstecköffnung (19) für den Haltestift (16) bilden.

5. Möbel nach einem der Ansprüche 1 bis 4, **dadurch gekennzeichnet, daß** zwei identische Aufnahmen (15) um 90° versetzt am Eck-Beschlagteil (6) angebracht sind.

6. Möbel nach Anspruch 4, **dadurch gekennzeichnet, daß** die Verriegelung zur Arretierung des Haltestiftes (16) in der Aufnahme (15) eine Klammer (22) ist, die die beiden freien Enden (20) der Rastschenkel (17, 18) zusammenhält.

7. Möbel nach Anspruch 6, **dadurch gekennzeichnet, daß** die Klammer (22) über ein Filmscharnier (24) mit dem Klipp-Teil (6) dauerhaft verbunden ist.

8. Möbel nach Anspruch 4, **dadurch gekennzeichnet, daß** die beiden Rastschenkel (17, 18) der Aufnahme (15) an ihren freien Enden (20) zum Schließen der Aufnahme (15) gegenseitig einhängbar sind.

9. Möbel nach Anspruch 3, **dadurch gekennzeichnet, daß** das Klipp-Teil (6) an den aneinander zugewandten Innenseiten von Innen- und Außenschenkel (7, 8) miteinander fluchtende Positionierstifte (13) aufweist, die in entsprechende Bohrungen (14) in der Einsatzplatte (5) zur Fixierung des Klipp-Teils (6) auf der Einsatzplatte (5) eingreifen.

10. Möbel nach Anspruch 3, **dadurch gekennzeichnet, daß** an der Innenseite des Außenschenkels (7) des Klipp-Teils (6) eine Federhülse (26) angeformt ist, die zur Befestigung des Klipp-Teils (6) an der Einsatzplatte (5) eine entsprechende Bohrung (14 ) darin durchgreift und mit ihren freien Federenden (27) eine Gegenöffnung (28) im Innenschenkel (8) hintergreift.
